# FASCICULE DE BREVET EUROPEEN

(11) **EP 4 043 290 B1**
(45) Date de publication et mention de la délivrance du brevet: **29.11.2023**
(21) Numéro de dépôt: 22153228.6
(22) Date de dépôt: 25.01.2022
(51) Int. Cl.: B60R 11/02, B60R 11/00

(54) **DISPOSITIF DE MAINTIEN D'UN APPAREIL ÉLECTRONIQUE PORTABLE DANS UN VÉHICULE AUTOMOBILE**
HALTEVORRICHTUNG FÜR EIN TRAGBARES ELEKTRONISCHES GERÄT IN EINEM KRAFTFAHRZEUG
DEVICE FOR HOLDING A PORTABLE ELECTRONIC DEVICE IN A MOTOR VEHICLE

(30) Priorité: 12.02.2021 FR 2101356
(43) Date de publication de la demande: 17.08.2022
(73) Titulaire: Renault s.a.s, 92100 Boulogne Billancourt (FR)
(72) Inventeur: DAGOREAU, Alain, 78084 guyancourt cedex (FR); MARCEAU, Thierry, 78084 Guyancourt cedex (FR)
(74) Mandataire: Renault Group

(56) Documents cités:
- CN-U- 210 469 431
- DE-U1-202020 104 447
- FR-A1- 3 059 954

## Description

L'invention concerne un dispositif de maintien d'un appareil électronique portable, en particulier de type smartphone, comprenant un organe de fixation destiné à fixer ledit dispositif sur un élément de planche de bord de véhicule automobile et un support relié à l'organe de fixation, destiné à recevoir l'appareil portable.

Il existe des dispositifs de maintien de ce type, dotés d'un bras articulé s'étendant entre l'organe de fixation et le support, par l'intermédiaire duquel le support et partant, l'appareil portable qui y est reçu, peut être déplacé dans différentes positions par rapport à l'élément de planche de bord de véhicule. Un tel dispositif est connu notamment par l'exemple qu'en donne le document de brevet CN210469431. Selon ce document, l'organe de fixation du dispositif de maintien est monté fixe au dos d'un écran de commande central du véhicule. Le document de brevet FR 3 059 954 A1 divulgue un dispositif de maintien d'un appareil électronique portable de type smartphone, comprenant un organe de fixation destiné à fixer ledit dispositif sur un élément de planche de bord de véhicule.

Ces dispositifs présentent toutefois un encombrement relativement important, du fait de la présence du bras articulé, ce qui peut poser des problèmes de sécurité. De surcroît, ils ne permettent qu'un réglage relativement limité de la position de l'appareil portable reçu dans le support. Aussi, un but de l'invention est de proposer un dispositif de maintien d'un appareil électronique portable dans un véhicule automobile, qui soit exempt au moins en partie des limitations exposées ci-dessus.

A cette fin, l'invention concerne un dispositif de maintien d'un appareil électronique portable de type smartphone, comprenant un organe de fixation destiné à fixer ledit dispositif sur un élément de planche de bord de véhicule automobile et un support relié à l'organe de fixation, destiné à recevoir l'appareil portable, ledit élément de planche de bord étant constitué par un écran d'affichage du véhicule, ledit dispositif de maintien étant caractérisé en ce qu'il comprend des rails disposés le long d'au moins un bord supérieur de l'écran, ledit organe de fixation étant pourvu d'éléments de guidage et de maintien destinés à coopérer avec les rails et d'un organe de commande actionnable manuellement entre un état de commande dans lequel lesdits éléments de guidage et de maintien peuvent translater librement dans une rainure ménagée dans les rails et un état de repos dans lequel lesdits éléments de guidage et de maintien sont bloqués dans ladite rainure

Grâce à cet agencement, différentes implantations du smartphone peuvent être aisément adoptés au niveau du poste de conduite du véhicule, en faisant simplement translater l'organe de fixation du dispositif de maintien du smartphone dans les rails le long d'au moins le bord supérieur de l'écran et ce, avec un encombrement réduit.

De préférence, le dispositif comprend en outre des rails disposés le long d'au moins l'un de bords latéraux opposés de l'écran.

Avantageusement, ledit organe de fixation comporte des moyens de rappel automatique dudit organe de commande actionnable manuellement dans son état de repos.

Avantageusement, lesdits éléments de guidage et de maintien comprennent une paire de mâchoires comportant une première surface de butée respective apte à venir en appui serré, dans ledit état de repos, contre des bords opposés respectifs de ladite rainure sous l'action d'un ressort de serrage.

Avantageusement, le ressort de serrage est agencé entre les mâchoires de la paire de mâchoires, de façon à pousser la première surface de butée respective de la paire de mâchoire contre les bords opposés respectifs de la rainure.

Avantageusement, les mâchoires de ladite paire de mâchoires comportent une seconde surface de butée respective sur laquelle une portée dudit organe de commande actionnable manuellement est apte à venir en appui dans ledit état de commande, en s'opposant à la force de rappel dudit ressort de serrage, de sorte à écarter ladite première surface de butée des bords opposés respectifs de ladite rainure.

Avantageusement, ledit organe de commande actionnable manuellement est constitué par un bouton poussoir.

De préférence, le support le support comprend une embase, montée à rotation directement sur l'organe de fixation, autour d'un axe sensiblement normal au plan de l'écran.

D'autres caractéristiques et avantages de l'invention ressortiront clairement de la description qui en est faite ci-après, à titre indicatif et nullement limitatif, en référence aux dessins annexés sur lesquels :
[Fig. 1] est une vue schématique d'un poste de conduite d'un véhicule automobile, incorporant un dispositif de maintien selon l'invention monté au niveau de l'écran de console centrale du véhicule ;
[Fig. 2] est une vue schématique de détail illustrant le principe de rails montés sur des côtés de l'écran pour y accueillir le dispositif de l'invention ;
[Fig. 3] est une vue schématique de détail de l'organe de fixation du dispositif de maintien l'invention, dans un état de repos correspondant à une position bloquée le long des rails ;
[Fig. 4] est une vue correspond à la vue de la figure 3, dans un état de commande où l'organe de fixation peut translater librement le long des rails.

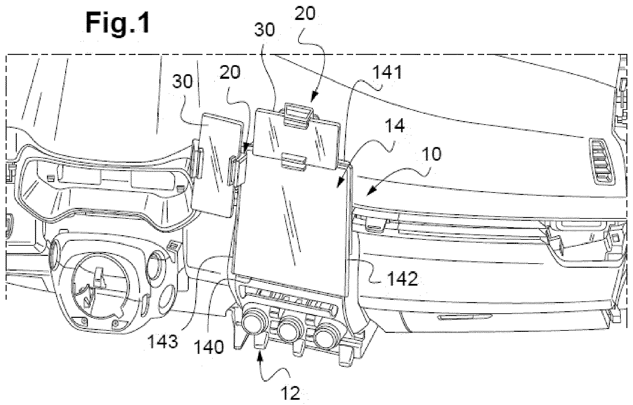

La figure 1 illustre une portion de l'avant de l'habitacle d'un véhicule automobile. Sur cette figure est représentée une console centrale 10 comprenant plusieurs sections dont au moins une section inférieure comportant des boutons de commande 12 et une section supérieure comprenant un écran d'affichage central 14. L'écran d'affichage 14 est monté sur la section inférieure par son bord inférieur 140, tandis qu'il présente avantageusement un bord supérieur libre 141, opposé au bord inférieur 140, et des bords latéraux opposés 142 et 143, respectivement droit et gauche, libres également. Au moins le bord libre supérieur 141 et, préférentiellement, l'ensemble des bords libres de l'écran d'affichage 14, à savoir le bord libre supérieur et les deux bords libres opposés droit et gauche, sont conçus pour permettre d'accueillir un dispositif de maintien 20 d'un smartphone 30, suivant une pluralité de positions le long de ces bords libres.

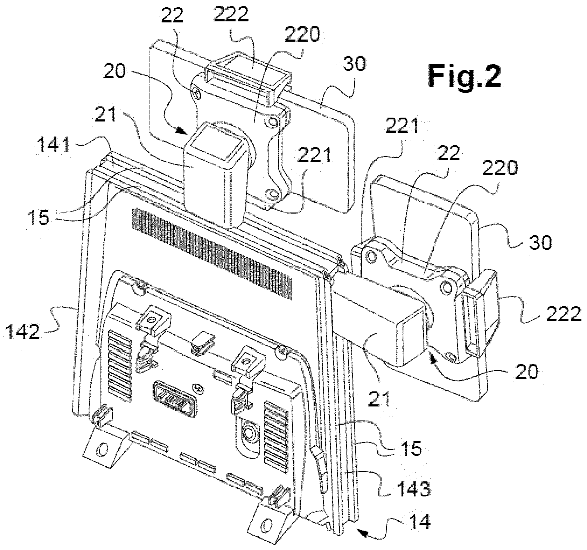

Pour ce faire, en référence avec la vue de détail de la figure 2, ces bords libres de l'écran d'affichage 14 sont pourvus de rails 15, préférentiellement cachés derrière l'entourage de l'écran 14, sur lesquels est destiné à être monté à coulissement le dispositif de maintien 20, par l'intermédiaire d'un organe de fixation 21 adapté à coopérer avec les rails, comme il sera vu plus en détail par la suite.

Comme illustré sur les figures 1 ou 2, le dispositif de maintien 20 peut indifféremment être monté à coulissement le long du bord libre supérieur 141 ou sur l'un des deux bords libres droit ou gauche 142, 143 de l'écran, au choix de l'utilisateur. Grâce au montage coulissant dans les rails dont sont équipés les bords libres de l'écran, le dispositif de maintien procure une grande latitude de positionnement du smartphone le long de ces bords de l'écran.

Le dispositif de maintien 20 comprend également un support 22 relié à l'organe de fixation 21, destiné à recevoir le smartphone 30. Le support 22 comprend préférentiellement une embase 220, montée à rotation directement sur l'organe de fixation 21, sur une portion du corps de celui-ci en saillie des rails, autour d'un axe sensiblement normal au plan de l'écran. L'embase 220 peut ainsi pivoter autour de cet axe par rapport à l'organe de fixation 21 monté coulissant dans les rails. L'embase 220 porte par ailleurs une mâchoire fixe 221 et une mâchoire mobile 222 par exemple, destinées à venir en prise contre des bords longitudinaux du smartphone pour son maintien dans le support 22, la face arrière du smartphone venant en appui contre l'embase 220.

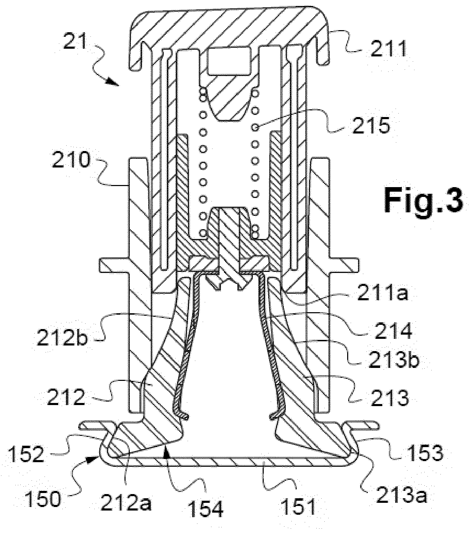

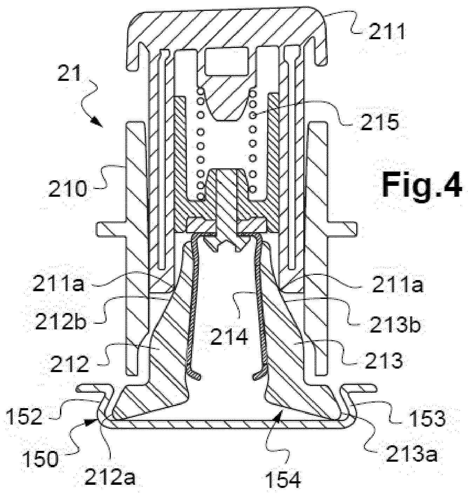

Comme on le voit mieux sur les vues de détail des figures 3 et 4, les rails équipant chacun des bords supérieur et latéraux de l'écran, sont constitué d'un profilé 150, par exemple en matière plastique, qui est fixé le long des bords de l'écran. Le profilé 150 comprend une base 151, qui s'étend sur toute la longueur du bord de l'écran sur lequel elle est fixée et une paire d'ailes latérales de guidage 152, 153 faisant saillie de la base 151. Le profilé définit ainsi une rainure longitudinale 154 sensiblement en forme de U.

L'organe de fixation 21 comprend un corps 210, dans lequel sont montés d'une part, un organe de commande actionnable manuellement préférentiellement sous la forme d'un bouton poussoir 211 et, d'autre part, des éléments de guidage et de maintien 212, 213, se présentant sous la forme d'une paire de mâchoires, destinée à coopérer avec les rails, sous l'action du bouton poussoir, entre un état de commande dans lequel la paire de mâchoires 212, 213 peut translater librement dans la rainure 154 ménagée dans les rails et un état de repos dans lequel la paire de mâchoires 212, 213 est bloquée dans la rainure.

La forme des éléments de guidage et de maintien est choisie de telle sorte qu'ils puissent circuler dans la rainure 154 ménagée dans les rails et être correctement guidés et maintenus dans les rails sans pouvoir en être retirés, sauf par l'extrémité ouverte des rails.

La figure 3 illustre l'état de repos, correspondant à la position bloquée de l'organe de fixation 21 le long des rails. Dans cet état de repos, la paire de mâchoires 212, 213 comporte une première surface de butée, dite surface de butée distale, respectivement 212a, 213a, venant en appui serré contre des bords opposés respectifs de la rainure 154, correspondant aux surfaces interne en vis-à-vis des ailes latérales de guidage du profilé, sous l'action d'un ressort de serrage 214, qui est agencé entre les deux mâchoires de façon à pousser les surfaces de butée distales de ces mâchoires contre les bords opposés respectifs de la rainure 154. Dans cette position de blocage, les surfaces de butée distales 212a, 213a des mâchoires 212, 213 sont donc appliquées contre les bords opposés de la rainure par l'action du ressort de serrage 214, ce qui bloque par friction l'organe de fixation 21 en position.

La figure 4 illustre l'état de commande dans lequel la paire de mâchoires 212, 213 et partant, l'organe de fixation 21, peut translater librement dans la rainure 154 ménagée dans les rails. Le passage de l'état de repos vers l'état de commande est déclenché par une action sur l'organe de commande actionnable manuellement, typiquement par un appui sur le bouton poussoir 211 de l'organe de fixation. L'appui sur le bouton poussoir 211 entraîne qu'une portée 211a de ce bouton poussoir vienne prendre appui sur une seconde surface de butée de la paire de mâchoire, dite surface de butée proximale, respectivement 212b, 213b, en s'opposant à la force de rappel de ressort de serrage 214 agencé entre les mâchoires, de manière à permettre d'écarter les surfaces de butée distales 212a, 213a des mâchoires des bords respectifs opposés de la rainure et ce, tant qu'un appui est maintenu sur le bouton poussoir.

Ainsi, dans cette position où les surfaces de butée distales 212a, 213a des mâchoires sont écartées des bords opposés de la rainure 154, la paire de mâchoires 212, 213 et partant, l'organe de fixation 21, peut translater librement le long de la rainure, jusqu'à permettre d'adopter la position souhaitée le long de la rainure pour le dispositif de maintien du smartphone. Le relâchement du bouton poussoir 211 libère les surfaces de butée proximale de la paire de mâchoire de l'appui opéré par la portée 211a du bouton poussoir, permettant le retour dans la position de repos sous l'effet du ressort de serrage 214.

On prévoit avantageusement des moyens de rappel automatique 215 du bouton poussoir 211 dans son état de repos, dès lors que l'appui sur le bouton poussoir est relâché. Ces moyens de rappel se présentent par exemple sous la forme d'un ressort de rappel monté le long de l'axe du bouton poussoir 211.

## Revendications

1. Dispositif de maintien (20) d'un appareil électronique portable de type smartphone (30), comprenant un organe de fixation (21) destiné à fixer ledit dispositif sur un élément de planche de bord de véhicule automobile et un support (22) relié à l'organe de fixation, destiné à recevoir l'appareil portable, ledit élément de planche de bord étant constitué par un écran d'affichage central (14) du véhicule, ledit dispositif de maintien étant **caractérisé en ce qu'**il comprend des rails (15) disposés le long d'au moins un bord supérieur (141) de l'écran, ledit organe de fixation étant pourvu d'éléments de guidage et de maintien (212, 213) destinés à coopérer avec les rails et d'un organe de commande (211) actionnable manuellement entre un état de commande dans lequel lesdits éléments de guidage et de maintien peuvent translater librement dans une rainure (154) ménagée dans les rails et un état de repos dans lequel lesdits éléments de guidage et de maintien sont bloqués dans ladite rainure.

2. Dispositif selon la revendication 1, **caractérisé en ce qu'**il comprend en outre des rails disposés le long d'au moins l'un de bords latéraux opposés (142, 143) de l'écran.

3. Dispositif selon la revendication 1 ou 2, **caractérisé en ce que** ledit organe de fixation comporte des moyens de rappel automatique (215) dudit organe de commande actionnable manuellement dans son état de repos.

4. Dispositif selon l'une quelconque des revendications 1 à 3, **caractérisé en ce que** lesdits éléments de guidage et de maintien comprennent une paire de mâchoires comportant une première surface de butée respective (212a, 213a), apte à venir en appui serré, dans ledit état de repos, contre des bords opposés respectifs de ladite rainure (154) sous l'action d'un ressort de serrage (214).

5. Dispositif selon la revendication 4, **caractérisé en ce que** le ressort de serrage (214) est agencé entre les mâchoires de la paire de mâchoires, de façon à pousser la première surface de butée respective (212a, 213a) de la paire de mâchoire contre les bords opposés respectifs de la rainure.

6. Dispositif selon la revendication 4 ou 5, **caractérisé en ce que** les mâchoires de ladite paire de mâchoires comportent une seconde surface de butée respective (212b, 213b) sur laquelle une portée (211a) dudit organe de commande est apte à venir en appui dans ledit état de commande, en s'opposant à la force de rappel dudit ressort de serrage (214), de sorte à écarter ladite première surface de butée (212a, 213a) des bords opposés respectifs de ladite rainure (154).

7. Dispositif selon l'une quelconque des revendications précédentes, **caractérisé en ce que** ledit organe de commande actionnable manuellement est constitué par un bouton poussoir (211).

8. Dispositif selon l'une quelconque des revendications précédentes, **caractérisé en ce que** le support comprend une embase (220), montée à rotation directement sur l'organe de fixation (21), autour d'un axe sensiblement normal au plan de l'écran.

## Patentansprüche

1. Haltevorrichtung (20) für ein tragbares elektronisches Gerät vom Typ Smartphone (30), umfassend ein Befestigungsorgan (21), das dazu bestimmt ist, die Vorrichtung an einem Armaturenbrettelement eines Kraftfahrzeugs zu befestigen, und eine mit dem Befestigungsorgan verbundene Halterung (22), die dazu bestimmt ist, das tragbare Gerät aufzunehmen, wobei das Armaturenbrettelement aus einem zentralen Anzeigebildschirm (14) des Fahrzeugs besteht, wobei die Haltevorrichtung **dadurch gekennzeichnet ist, dass** sie Schienen (15) umfasst, die entlang mindestens eines oberen Rands (141) des Bildschirms angeordnet sind, wobei das Befestigungsorgan mit Führungs- und Halteelementen (212, 213) versehen ist, die dazu bestimmt sind, mit den Schienen zusammenzuwirken, und mit einem Betätigungsorgan (211), das manuell betätigbar ist zwischen einem Betätigungszustand, in dem die Führungs- und Halteelemente in einer in den Schienen ausgebildeten Nut (154) frei verschieblich sind, und einem Ruhezustand, in dem die Führungs- und Halteelemente in der Nut arretiert sind.

2. Vorrichtung nach Anspruch 1, **dadurch gekennzeichnet, dass** sie ferner Schienen umfasst, die entlang mindestens eines von entgegengesetzten seitlichen Rändern (142, 143) des Bildschirms angeordnet sind.

3. Vorrichtung nach Anspruch 1 oder 2, **dadurch gekennzeichnet, dass** das Befestigungsorgan Mittel zum automatischen Rückstellen (215) des manuell betätigbaren Betätigungsorgans in dessen Ruhezustand aufweist.

4. Vorrichtung nach einem der Ansprüche 1 bis 3, **dadurch gekennzeichnet, dass** die Führungs- und Halteelemente ein Backenpaar umfassen, das eine jeweilige erste Anschlagfläche (212a, 213a) aufweist, die geeignet ist, in dem Ruhezustand unter der Wirkung einer Klemmfeder (214) an jeweiligen entgegengesetzten Rändern der Nut (154) eng zur Anlage zu kommen.

5. Vorrichtung nach Anspruch 4, **dadurch gekennzeichnet, dass** die Klemmfeder (214) zwischen den Backen des Backenpaars eingerichtet ist, so dass sie die jeweilige erste Anschlagfläche (212a, 213a) des Backenpaars gegen die jeweiligen entgegengesetzten Ränder der Nut drückt.

6. Vorrichtung nach Anspruch 4 oder 5, **dadurch gekennzeichnet, dass** die Backen des Backenpaars eine jeweilige zweite Anschlagfläche (212b, 213b) aufweisen, an der eine Anlagefläche (211a) des Betätigungsorgans in dem Betätigungszustand zur Anlage gelangen kann, wobei es der Rückstellkraft der Klemmfeder (214) entgegenwirkt, so dass die erste Anschlagfläche (212a, 213a) von den jeweiligen entgegengesetzten Rändern der Nut (154) beabstandet wird.

7. Vorrichtung nach einem der vorhergehenden Ansprüche, **dadurch gekennzeichnet, dass** das manuell betätigbare Betätigungsorgan aus einem Druckknopf (211) besteht.

8. Vorrichtung nach einem der vorhergehenden Ansprüche, **dadurch gekennzeichnet, dass** die Halterung einen Sockel (220) umfasst, der direkt auf dem Befestigungsorgan (21) um eine zur Ebene des Bildschirms im Wesentlichen senkrechte Achse drehbar mrontiert ist.

## Claims

1. Holder device (20) for holding a portable electronic device of the smart phone type (30), comprising a mount (21) intended for mounting said device on a motor vehicle dashboard element, and a cradle (22) connected to the mount and intended to accept the portable device, said dashboard element consisting of a central display screen (14) of the vehicle, said holder device being **characterized in that** it comprises rails (15) arranged along at least an upper edge (141) of the screen, said mount being provided with guiding and retaining elements (212, 213) which are intended to collaborate with the rails, and with an operating member (211) that can be manipulated manually between an operated state in which said guiding and retaining elements can move freely in translation in a slot (154) formed in the rails, and a state of rest in which said guiding and retaining elements are immobilized in said slot.

2. Device according to Claim 1, **characterized in that** it further comprises rails arranged along at least one of the opposite lateral edges (142, 143) of the screen.

3. Device according to Claim 1 or 2, **characterized in that** said mount comprises automatic-return means (215) for returning said manually operable operating member to its state of rest.

4. Device according to any one of Claims 1 to 3, **characterized in that** said guiding and retaining elements comprise a pair of jaws having a first respective abutment surface (212a, 213a) that is able to clamp, in said state of rest, against the respective opposite edges of said slot (154) under the action of a clamping spring (214) .

5. Device according to Claim 4, **characterized in that** the clamping spring (214) is arranged between the jaws of the pair of jaws so as to push the respective first abutment surface (212a, 213a) of the pair of jaws against the respective opposite edges of the slot.

6. Device according to Claim 4 or 5, **characterized in that** the jaws of said pair of jaws have a second respective abutment surface (212b, 213b) against which a bearing surface (211a) of said operating member is able to come to bear in said operated state by overcoming the return force of said clamping spring (214) so as to move said first abutment surface (212a, 213a) away from the respective opposite edges of said slot (154).

7. Device according to any one of the preceding claims, **characterized in that** said manually operable operating member consists of a push-button (211).

8. Device according to any one of the preceding claims, **characterized in that** the cradle comprises a base (220), mounted with the ability to rotate directly on the mount (21) about an axis substantially normal to the plane of the screen.
